# EUROPEAN PATENT APPLICATION

(11) **EP 4 373 052 A1**
(43) Date of publication of application: **22.05.2024**
(21) Application number: 22208230.7
(22) Date of filing: 18.11.2022
(51) Int. Cl.: H04L 47/72, H04L 47/78, H04L 47/762

(54) **NODE FOR A RADIO COMMUNICATION NETWORK WITH DYNAMIC RESERVATION OF TRANSMISSION CAPACITY, CORRESPONDING NETWORK, AND METHOD**

(71) Applicant: Rohde & Schwarz GmbH & Co. KG, 81671 München (DE)
(72) Inventor: Haas, Dr. Erik, 81673 München (DE); Bott, Rainer, 82346 Andechs (DE); Weber, Marco, 81667 München (DE)
(74) Representative: Rupp, Christian

(57) **Abstract**

A node (30) for a radio communication network (80) with dynamic reservation of transmission capacity is provided. Said node (30) comprises a communication unit (31) for communicating with at least one neighboring node (40, 50, 60, 70), and at least one antenna (32a, 32b, 32c) coupled to said communication unit (31). In this context, the communication unit (31) is configured to reserve transmission capacity on the basis of at least one RTS and/or CTS and/or nCTS handshake packet. In addition to this, the communication unit (31) is further configured to limit transmission capacity reservation to a certain number of the at least one neighboring node (40, 50, 60) on the basis of certain properties with respect to said certain number of the at least one neighboring node (40, 50, 60).

## Description

The invention relates to a node for a radio communication network with dynamic reservation of transmission capacity, a radio communication network with dynamic reservation of transmission capacity, and a method for dynamic reservation of transmission capacity with respect to a radio communication network.

Generally, in times of an increasing number of communication applications providing wireless connectivity capabilities, there is a growing need of a node for a radio communication network with dynamic reservation of transmission capacity, a radio communication network with dynamic reservation of transmission capacity, and a method for dynamic reservation of transmission capacity with respect to a radio communication network in order to ensure a particularly efficient communication.

The document "A Real-Time, Distributed, Directional TDMA MAC Protocol for QoS-Aware Communication in Multi-Hop Wireless Networks" by S. Garg, V. S. S. Kuchipudi, E. S. Bentley and S. Kumar, in IEEE Access, vol. 9, pp. 26343-26361, 2021, doi: 10.1109/ACCESS.2021.3057587, discloses a scheme for directional multi-hop wireless networks. In the proposed scheme, the 1-hop neighborhood of every node is divided into fully connected 1-hop neighborhoods, which allows the node to intelligently serve multiple routes without requiring a globally converged scheduling solution.

Furthermore, the document "Self-Stabilizing MAC protocols for large-scale, heavy loaded sensor networks under consideration of hidden nodes" by S. Unterschütz and V. Turau, doi: 10.15480/882.1067, examines the issue of the hidden node problem significantly restricting the attainable throughput in large-scale heavy loaded sensor networks and depicts why most TDMA as well as dedicated hybrid MAC protocols are still negatively affected by this phenomenon.

Moreover, EP 3 490 327 B1 relates to a communication network without a network master, which consists of at least two network nodes, each with a transmit and/or receive antenna. Each of the network nodes provides at least one data frame for communication with another network node, the data frame containing at least one user data packet which is to be transmitted between the at least two network nodes. Furthermore, at least one network node has a reservation functionality in order to reserve at least one time slot in the network node intended for receiving the user data packet.

In this context, each network node in said communication network with directional antennas sends RTS messages to the other nodes with whom it wishes to communicate. By listening to the messages by other nodes, they can determine whether the planned transmission may interfere with their own reception from another node or transmitter, respectively, and send a nCTS message if necessary.

In addition to this, to avoid the so-called deafness problem, each node in the network is assigned an exclusive slot for RTS and CTS in which only the respective node can transmit. All other nodes know this assignment and can listen to the transmissions by aligning their radiation lobe accordingly.

Disadvantageously, this exclusive assignment of these slots in the entire network leads to a considerable overhead and reduced network throughput for a large number of network nodes. Nodes or participants, respectively, that have no direct contact, exemplarily in the sense of 1-hop neighborhood, with a transmitting or receiving node, and thus cannot interfere with a possible communication, cannot communicate themselves in the slots not reserved for them.

Accordingly, there is the object to provide a node for a radio communication network with dynamic reservation of transmission capacity, a radio communication network with dynamic reservation of transmission capacity, and a method for dynamic reservation of transmission capacity with respect to a radio communication network, thereby ensuring a particularly high efficiency of communication especially in the sense of a significantly reduced overhead and a notably increased network throughput.

This object is solved by the features of claim 1 for a node for a radio communication network with dynamic reservation of transmission capacity, the features of claim 12 for a radio communication network with dynamic reservation of transmission capacity, and the features of claim 15 for a method for dynamic reservation of transmission capacity with respect to a radio communication network. The dependent claims contain further developments.

According to a first aspect of the invention, a node for a radio communication network, especially a decentralized radio communication network, with dynamic reservation of transmission capacity is provided. Said node comprises a communication unit for communicating with at least one neighboring node, and at least one antenna coupled to said communication unit. In this context, the communication unit is configured to reserve transmission capacity on the basis of at least one RTS (request to send) and/or CTS (clear to send) and/or nCTS (not clear to send) handshake packet. In addition to this, the communication unit is further configured to set or limit transmission capacity reservation to a certain number of the at least one neighboring node on the basis of certain properties with respect to said certain number of the at least one neighboring node. Advantageously, a particularly high efficiency of communication especially in the sense of a significantly reduced overhead and a notably increased network throughput can be ensured.

With respect to the corresponding communication, it is noted that said corresponding communication may especially comprise a frame structure comprising RTS and/or CTS and/or nCTS data packets.

According to a first preferred implementation form of the first aspect of the invention, especially as an option, the at least one antenna comprises between 3 and 6 antennas or more than 6 antennas. Additionally, the certain number of the at least one neighboring node is limited to 1 neighboring node per antenna. In further addition to this, especially as an option, each neighboring node is reached directly or via at least one hop. Advantageously, for instance, complexity can be reduced, thereby increasing efficiency. Further advantageously, greater antenna arrays such as an active electronical scanned array can be used for a node, which also leads to an increased efficiency.

According to a second preferred implementation form of the first aspect of the invention, especially as an option, the at least one antenna comprises 1 or 2 antennas. In addition to this, the certain number of the at least one neighboring node is limited to between 1 and 4 neighboring nodes per antenna. Further additionally, especially as an option, each neighboring node is reached directly or via at least one hop. Advantageously, for example, the node can be designed in a flexible manner, which leads to an increased cost-efficiency.

According to a further preferred implementation form of the first aspect of the invention, at least one, preferably each, of the at least one antenna comprises or is an antenna with directivity or directional characteristics. In addition to this or as an alternative, at least a part, preferably the entirety, of the at least one antenna is configured to cover the corresponding communication needs especially in all spatial directions. Advantageously, for instance, beamforming can be implemented, which leads to an increased efficiency.

With respect to the above-mentioned antenna with directivity or directional characteristics, it is noted that such an antenna may comprise or be an electronically alignable and/or electronically steerable antenna.

According to a further preferred implementation form of the first aspect of the invention, the communication unit is configured to transmit and/or receive at least one payload data packet. Advantageously, for example, efficiency can further be increased.

With respect to the corresponding communication, it is noted that said corresponding communication may especially comprise a frame structure comprising RTS and/or CTS and/or nCTS data packets and payload data packets.

According to a further preferred implementation form of the first aspect of the invention, the communication unit is configured to interleave at least one RTS and/or CTS slot with at least one slot for the at least one payload data packet. Advantageously, for instance, long dead times without data transmission can be prevented.

According to a further preferred implementation form of the first aspect of the invention, the certain properties comprise at least one of position information, receive level, signal-to-noise ratio, data rate, especially achievable data rate, bit error rate, especially bit error rate without coding, or any combination thereof. Advantageously, for example, flexibility, and thus also efficiency, can be increased.

According to a further preferred implementation form of the first aspect of the invention, the communication unit is configured to transmit the at least one nCTS handshake packet only to the at least one neighboring node, especially the certain number of the at least one neighboring node, transmitting at least another RTS handshake packet.

Additionally or alternatively, the communication unit is configured not to transit the at least one nCTS handshake packet in the context of transmitting the at least one RTS handshake packet. In further addition to this or as a further alternative, the communication unit is configured to evaluate no receipt of the at least one CTS handshake packet as at least one implicit nCTS handshake packet. Advantageously, for instance, data being sent from nodes transmitting at least another RTS handshake packet can efficiently be prevented.

According to a further preferred implementation form of the first aspect of the invention, the communication unit is configured to use probing for detecting potential interference with respect to the at least one neighboring node, especially the certain number of the at least one neighboring node. Advantageously, for example, this allows for a spatial re-use or parallel transmission, respectively. Further advantageously, such a parallel transmission can greatly be supported by the usage of antennas with directivity or directional characteristics.

According to a further preferred implementation form of the first aspect of the invention, the communication unit is configured to create at least a part of a sparse communication table on the basis of the certain number of the at least one neighboring node or the certain number of the at least one neighboring node and corresponding links between said certain number of the at least one neighboring node. Advantageously, for instance, the corresponding sparse communication table can be formed with the aid of at least the part of the sparse communication table and possible further parts thereof in an efficient manner.

According to a further preferred implementation form of the first aspect of the invention, the communication unit is configured to determine a checksum with respect to at least the part of the sparse communication table. In addition to this or as an alternative, the communication unit is configured to transmit at least the part of the sparse communication table and/or the checksum to the certain number of the at least one neighboring node. Advantageously, for example, the checksum can be a hash value which can especially ensure the consistency of information in the network in particularly efficient manner since only one value and not the whole information has to be distributed over the network.

According to a second aspect of the invention, a radio communication network with dynamic reservation of transmission capacity is provided. Said radio communication network comprises at least two nodes according to the first aspect of the invention or any of its preferred implementation forms, respectively. Advantageously, a particularly high efficiency of communication especially in the sense of a significantly reduced overhead and a notably increased network throughput can be ensured.

According to a first preferred implementation form of the second aspect of the invention, the radio communication network further comprises at least one central processing node. In this context, the at least one central processing node is configured to create a full communication table on the basis of the at least two nodes or the at least two nodes and corresponding links between the at least two nodes. In addition to this or as an alternative, the at least one central processing node is configured to derive a sparse communication table especially from the full communication table preferably on the basis of certain properties with respect to the at least two nodes. Advantageously, for instance, a high flexibility can be ensured because the sparse communication table cannot only be created in a decentralized manner but also in a centralized manner, thereby also ensuring a high efficiency.

According to a second preferred implementation form of the second aspect of the invention, the at least one central processing node is configured to determine a checksum with respect to the sparse communication table. In addition to this or as an alternative, the at least one central processing node is configured to transmit the sparse communication table and/or the checksum to the at least two nodes. Advantageously, for example, the checksum can be a hash value which can especially ensure the consistency of information in the network in particularly efficient manner since only one value and not the whole information has to be distributed over the network.

It is noted that the first aspect of the invention or its preferred implementation forms, respectively, analogously apply for the second aspect of the invention and vice versa.

According to a third aspect of the invention, a method for dynamic reservation of transmission capacity with respect to a radio communication network is provided. Said method comprises the steps of communicating with at least one neighboring node of the radio communication network especially with the aid of a communication unit of a node of the radio communication network, reserving transmission capacity on the basis of at least one RTS and/or CTS and/or nCTS handshake packet especially with the aid of the communication unit, and limiting transmission capacity reservation to a certain number of the at least one neighboring node on the basis of certain properties with respect to said certain number of the at least one neighboring node especially with the aid of the communication unit. Advantageously, a particularly high efficiency of communication especially in the sense of a significantly reduced overhead and a notably increased network throughput can be ensured.

It is noted that the first aspect of the invention or its preferred implementation forms, respectively, and/or the second aspect of the invention or the preferred implementation forms thereof, respectively, analogously apply for the third aspect of the invention and vice versa.

Exemplary embodiments of the invention are now further explained with respect to the drawings by way of example only, and not for limitation. In the drawings:
- Fig. 1: shows an exemplary embodiment of an inventive node in combination with an exemplary embodiment of an inventive network;
- Fig. 2: shows a further exemplary embodiment of an inventive network;
- Fig. 3: shows a flow chart of an exemplary embodiment of the third aspect of the invention;
- Fig. 4: shows an exemplary sparse graph in the sense of the invention;
- Fig. 5: shows an exemplary frame in the sense of the invention;
- Fig. 6: shows an exemplary full graph in the sense of the invention; and
- Fig. 7: shows a further exemplary sparse graph being based on the full graph according to Fig. 6.

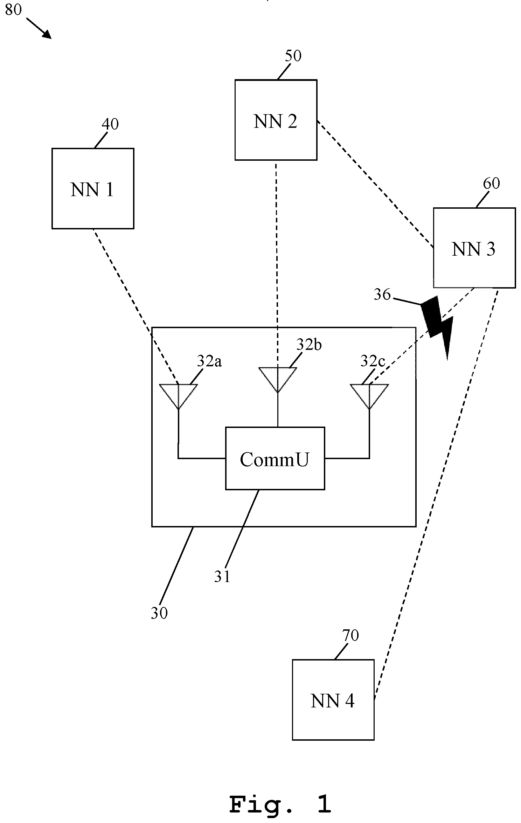

With respect to Fig. 1, a block diagram of an exemplary embodiment 30 of an inventive node for a radio communication network with dynamic reservation of transmission capacity.

According to Fig. 1, said node 30 comprises a communication unit 31 for communicating with at least one neighboring node such as the neighboring nodes 40, 50, 60, 70, and at least one antenna, exemplarily the antennas 32a, 32b, 32c, coupled to said communication unit 31. It is noted that respective communication links are illustrated with the aid of dotted lines. It is further noted that, for instance, there are not only communication links between said node 30 and each of the nodes 40, 50 and 60 but also between the nodes 50 and 60 and the nodes 60 and 70. Further exemplarily, at least a part of the respective communication links may be interfered, wherein the corresponding interference is illustrated with the aid of a flash icon 36.

In this context, the communication unit 31 is configured to reserve transmission capacity on the basis of at least one RTS and/or CTS and/or nCTS handshake packet.

In addition to this, the communication unit 31 is further configured to limit transmission capacity reservation to a certain number of the neighboring nodes 40, 50, 60, 70 on the basis of certain properties with respect to said certain number of the neighboring nodes 40, 50, 60, 70.

As it can be seen from Fig. 1, said certain number of the neighboring nodes 40, 50, 60, 70 exemplarily comprises 3 neighboring nodes, namely the nodes 40, 50, 60. It can further be seen, especially in accordance with the respective communication links, that node 70 is a neighbor of node 60, whereas node 70 is not a neighbor of node 30.

Accordingly, it is noted that whereas the at least one antenna exemplarily comprises 3 antennas, namely the above-mentioned antennas 32a, 32b, 32c, the certain number of the neighboring nodes is limited to 1 neighboring node per antenna. In this context, it is further noted that each neighboring node is exemplarily reached directly but can alternatively be reached via at least one hop.

As an alternative, whereas the at least one antenna can comprise 1 or 2 antennas, the certain number of the at least one neighboring node can be limited to between 1 and 4 neighboring nodes per antenna. Optionally, each neighboring node can be reached directly or via at least one hop.

As a further alternative, whereas the at least one antenna can comprise more than 6 antennas, the certain number of the at least one neighboring node can be limited to 1 neighboring node per antenna. As an option, each neighboring node can be reached directly or via at least one hop.

Again, with respect to the above-mentioned communication unit 31, it is noted that the communication unit is configured to transmit and/or receive at least one payload data packet.

Moreover, with respect to the at least one antenna, exemplarily each of the antennas 32a, 32b, 32c, it is noted that said antennas may especially comprise a directivity. Accordingly, the at least one antenna or each of the antennas 32a, 32b, 32c may be a directional antenna.

It is further noted that it might be particularly advantageous if the communication unit 31 is configured to interleave at least one RTS and/or CTS slot with at least one slot for the at least one payload data packet.

With respect to the above-mentioned certain properties, it should be mentioned that the certain properties may comprise at least one of position information, receive level, signal-to-noise ratio, data rate, bit error rate, or any combination thereof.

It might be particularly advantageous if the communication unit 31 is configured to transmit the above-mentioned at least one CTS and/or nCTS handshake packet only to the above-menionted certain number of the neighboring nodes, exemplarily the neighboring nodes 40, 50, 60, transmitting at least another RTS handshake packet.

Furthermore, the communication unit 31 can be configured not to transit the above-mentioned at least one CTS and/or nCTS handshake packet in the context of transmitting the above-mentioned at least one RTS handshake packet.

It is noted that it is also possible that the communication unit 31 is configured to transmit at least one RTS handshake packet only to the above-mentioned certain number of the neighboring nodes, exemplarily the neighboring nodes 40, 50, 60, transmitting at least another CTS and/or nCTS handshake packet.

In general, it might be particularly advantageous if a RTS handshake packet is transmitted and then a CTS and/or nCTS handshake packet is returned and vice versa. The respective nodes or the corresponding communication units thereof, respectively, should be configured accordingly.

Moreover, the communication unit 31 can be configured to evaluate no receipt of the above-mentioned at least one CTS handshake packet as at least one implicit nCTS handshake packet.

Further, the communication unit 31 can be configured to use probing for detecting potential interference with respect to the at least one neighboring node, especially the certain number of the at least one neighboring node, exemplarily the neighboring nodes 40, 50, 60.

It is noted that it might be particularly advantageous if the communication unit 31 is configured to create at least a part of a sparse communication table on the basis of the certain number of the neighboring nodes, exemplarily the neighboring nodes 40, 50, 60, or the certain number of the neighboring nodes and corresponding links between said certain number of the neighboring nodes.

It is further noted that the communication unit 31 can further be configured to form a sparse communication table on the basis of at least said part of the sparse communication table and at least another part of the sparse communication especially received from at least one neighboring node preferably of said certain number of the neighboring nodes.

In this context, the communication unit 31 may preferably be configured to determine a checksum with respect to at least the part of the sparse communication table and/or the sparse communication table.

In addition to this or as an alternative, the communication unit 31 may preferably be configured to transmit at least the part of the sparse communication table and/or the sparse communication table and/or the checksum to the certain number of the at least one neighboring node.

For the sake of completeness, with respect to the neighboring nodes 40, 50, 60, 70, it is noted that each of said neighboring nodes 40, 50, 60, 70 may preferably be a node in the sense of the invention such as the node 30. Accordingly, each of the neighboring nodes 40, 50, 60, 70 may preferably be similar or identical to the node 30.

It is additionally noted that Fig. 1 also illustrates an exemplary embodiment 80 of an inventive radio communication network with dynamic reservation of transmission capacity, especially decentralized radio communication network with dynamic reservation of transmission capacity.

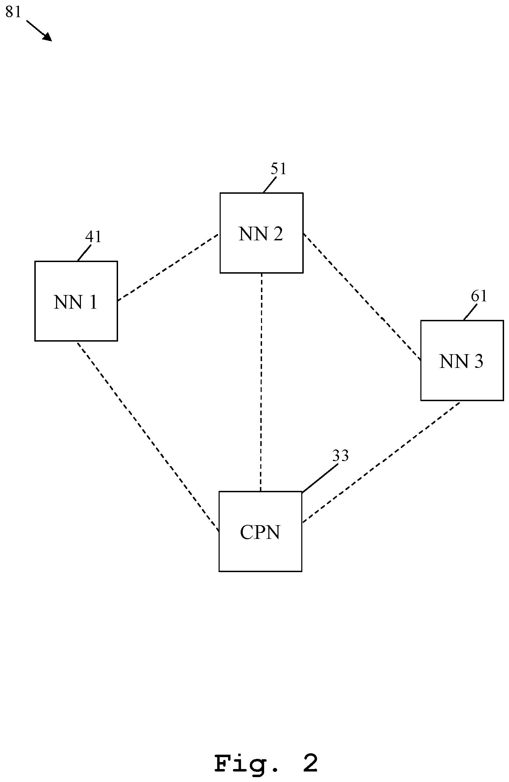

Now, with respect to Fig. 2, a further exemplary embodiment 81 of an inventive radio communication network with dynamic reservation of transmission capacity is illustrated.

According to Fig. 2, said network 81 comprises at least two nodes, exemplarily the three nodes 41, 51, 61, such as the node 30 of Fig. 1, and a central processing node 33. In this context, the central processing node 33 is configured to create a full communication table on the basis of the three nodes 41, 51, 61, or the said three nodes 41, 51, 61 and corresponding links between the three nodes 41, 51, 61, preferably on the basis of the four nodes 33, 41, 51, 61, or the said four nodes 33, 41, 51, 61 and corresponding links between the four nodes 33, 41, 51, 61. It is noted that respective communication links are illustrated with the aid of dotted lines. It is further noted that, for instance, there are not only communication links between said central processing node 33 and each of the nodes 41, 51 and 61 but also between the nodes 41 and 51 and the nodes 51 and 61.

In addition to this, the central processing node 33 may be configured to derive a sparse communication table, such as the above-mentioned one, especially from the full communication table preferably on the basis of certain properties, such as the above-mentioned ones, with respect to the three nodes 41, 51, 61, preferably the four nodes 33, 41, 51, 61. Advantageously, the central processing node 33 can be configured to use respective directional antenna characteristics to derive the sparse communication table.

Furthermore, it might be particularly advantageous if the central processing node 33 is configured to determine a checksum with respect to the sparse communication table.

Moreover, it is noted that the central processing node 33 can be configured to transmit the sparse communication table and/or the checksum to the three nodes 41, 51, 61, or each of said three nodes 41, 51, 61, respectively.

With respect to the central processing node 33, it is noted that said central processing node 33 can also be implemented in the form of at least two central processing nodes which interact in the sense of the central processing node 33.

It is further noted that multiple nodes, preferably each node, in the network can be such a central processing node and thus a partly decentralized, preferably a completely decentralized, network develops. If these nodes produce different results, the discrepancy is detected by exchanging the sparse communication table or parts of it or by the checksum, respectively. The nodes can then agree on which configuration is the correct one. In this way, consistency in the network can advantageously be ensured.

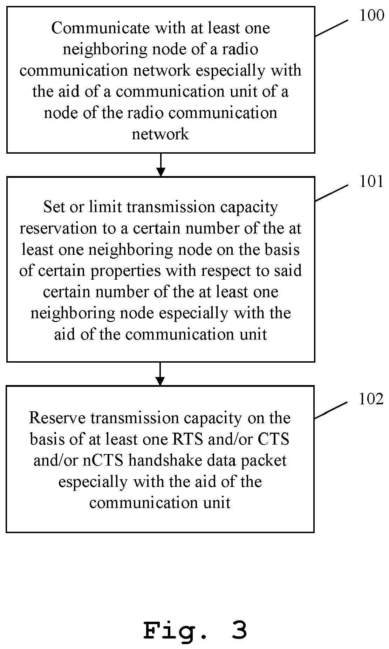

Fig. 3 depicts a flow chart of an exemplary embodiment of the inventive method for dynamic reservation of transmission capacity with respect to a radio communication network, especially a decentralized radio communication network.

In accordance with Fig. 3, a first step 100 comprises communicating with at least one neighboring node of the radio communication network especially with the aid of a communication unit of a node of the radio communication network. Then, in a second step 101, transmission capacity reservation is set or limited to a certain number of the at least one neighboring node on the basis of certain properties with respect to said certain number of the at least one neighboring node especially with the aid of the communication unit. Furthermore, in a third step 102, transmission capacity is reserved on the basis of at least one RTS and/or CTS and/or nCTS handshake packet especially with the aid of the communication unit.

Before the following figures are explained in detail, it is noted that the full graph mentioned in the following can especially be seen as a visual representation of the above-mentioned full communication table, whereas the sparse graph explained in the following can especially be seen as a visual representation of the above-mentioned sparse communication table. Accordingly, the explanations below regarding said visual representations analogously apply for the respective communication tables above.

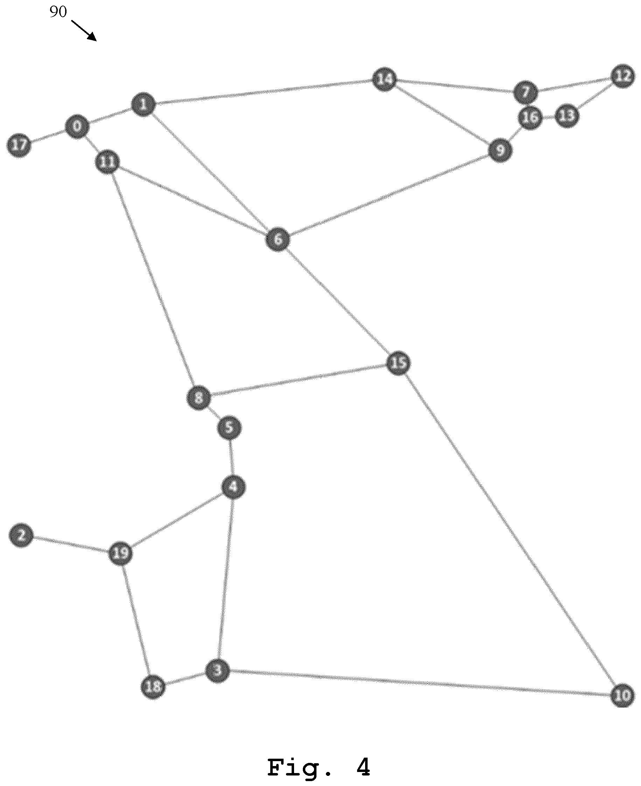

Inventively, a sparse graph, an exemplary embodiment 90 of which is illustrated by Fig. 4, is created in which each node has only a pre-specified maximum number of connections. Although a node may have more than the number of 1-hop neighbors specified therein, it will make reservations using RTS and/or CTS and/or nCTS data packets only to these.

In accordance with the sparse graph 90 of Fig. 4, it is noted that said sparse graph 90 exemplarily depicts nodes 0 to 19. In this context, the respective connections between corresponding ones of said 20 nodes represent communication links, especially bidirectional communication links.

It is noted that only the 1-hop neighbors specified in this graph 90 participate in the corresponding RTS/CTS cycle for this node. For instance, as it can be seen from Fig. 4, node 6 communicates only with nodes 1, 9, 11, and 15, although it could also reach nodes 0, 7, 13, and 16.

Especially due to the reduced number of neighbors, reservations can be made in advance on edges without the need for data. Preferably, reservations are made in advance on all edges of the sparse graph. In the case that data is available for transmission, it can be transmitted immediately with low latency.

Furthermore, if data communication is to take place between nodes that are not direct neighbors in the sparse graph, the information can be forwarded across multiple nodes using forwarding.

Moreover, the sparse graph 90 is known throughout the network. Thus, each node knows with whom it can execute the RTS/CTS phase or cycle, respectively. It is thus also possible for this phase or cycle, respectively, to be executed in parallel by several nodes. By limiting the communication possibilities to the 1-hop neighbors as well as sending the RTS/CTS messages or data packets, respectively, in parallel, this cycle is reduced in time and thus the overhead is reduced. For networks with a large number of nodes, this means that considerably fewer time slots are required for reservation than the number of network nodes. Advantageously, this leads to an increased network throughput. Further advantageously, this network throughput can be further increased, if the antennas have directional characteristics.

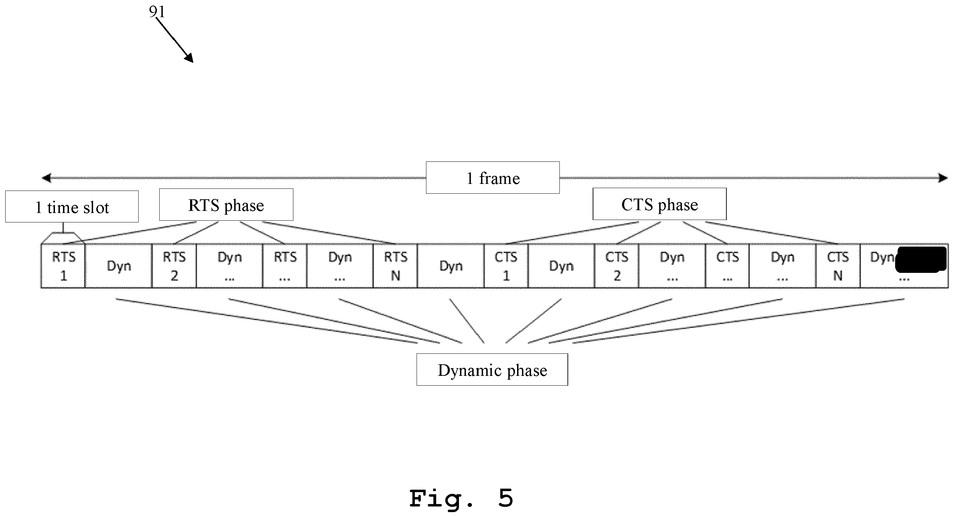

Preferably, the RTS/CTS phase can be interleaved with the data phase, as shown in Fig. 5 illustrating an exemplary frame 91, preferably a Medium Access Control (MAC) frame, in the sense of the invention, especially in order to avoid longer dead times at the beginning of the frame during which no other data is sent. In this case, an executed reservation may not apply to the current frame, but to the next frame.

With respect to said Fig. 5, it is noted that said frame 91 comprises multiple RTS, CTS, and dynamic phases, which are especially arranged in respective time slots.

In addition to this, nodes that are not involved in communication in the current RTS or CTS slot can also perform data communication in parallel.

The shorter RTS/CTS cycle also allows it to be repeated more often in a frame, thereby reducing latency for transmissions with dynamic reservation.

Especially because not all 1-hop neighbors are involved, receivers or receiving nodes, respectively, not included in the sparse graph 90 of Fig. 4 may be disturbed by a transmission. For example, node 6 could interfere with the reception at node 13 if it receives the transmission from node 16 in parallel in the same slot. This interference can be minimized on the one hand by each transmitter or transmitting node, respectively, transmitting only with the power that is necessary for reliable reception at the receiver and/or resolved during the corresponding RTS and/or CTS and/or nCTS phase.

Accordingly, it might be particularly advantageous if the communication unit 31 of the above-mentioned node 30 according to Fig. 1 is configured to control communication power, preferably transmission power, especially on the basis of the certain properties.

Furthermore, especially in the light of said communication unit 31, which can be configured to use probing as already mentioned in the context of Fig. 1, it is noted that probing phases can be interspersed at larger time intervals. In these phases, each node transmits to its neighbors defined in the sparse graph 90. The other 1-hop neighbors listen in during this phase and can thus judge whether a transmission will interfere with their own reception.

If so, this can be communicated to the nodes involved so that any interference can be taken into account in the subsequent RTS/CTS phase. Preferably, the transmission in this probing phase takes place with the transmission power required for assured communication to a node.

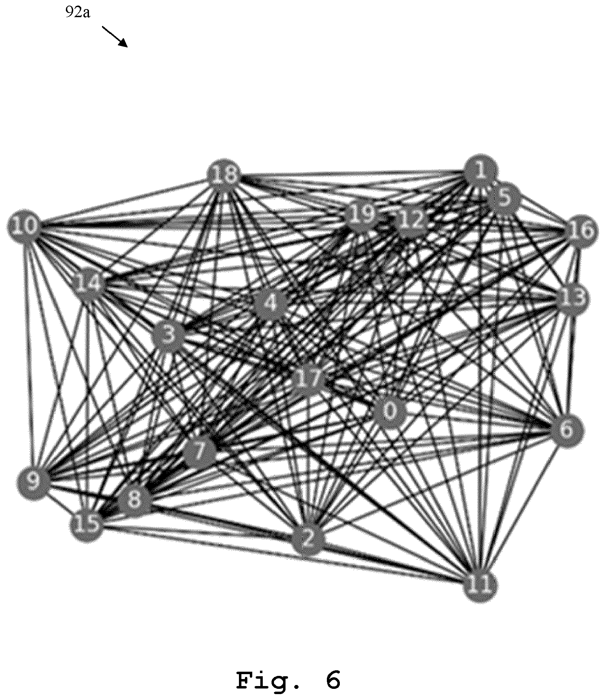

Now, with respect to Fig. 6, an exemplary embodiment 92a of a full graph is shown, which comprises nodes 0 to 19. A sparse graph can be determined from the full graph. This full graph contains all 1-hop neighbor relations, i.e., for each node there is an edge to another node if this node is reachable in principle. This reachability can, but does not have to, be determined with full transmission power and minimum data rate. Of course, these parameters result in much more connections than are available in the sparse graph afterwards.

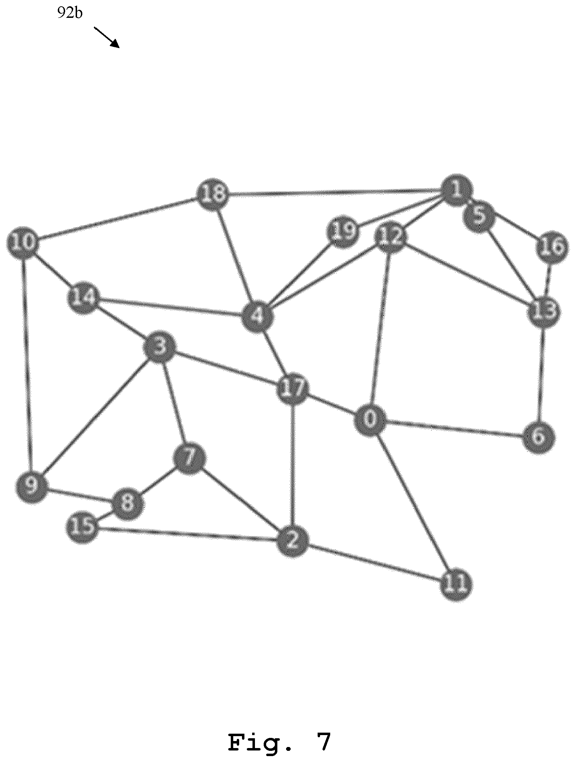

Furthermore, the sparse graph can be determined from the full graph especially by selecting the nearest neighbors for each node as illustrated by the exemplary sparse graph 92b according to Fig. 7, which is based on the full graph 92a of Fig. 6. This can be done using position information available in the network and/or the directional characteristics of the antennas. Alternatively, or as a complement, measurements of reception quality can be used in determining the full graph. Such quality characteristics or certain properties, respectively, may comprise receive level, signal-to-noise ratio, data rate or bit error rate, especially bit error rate without coding, or a combination thereof.

In addition to this, when selecting neighboring nodes, attention can be paid to a minimum number of edges per node in the sparse graph 92b.

Further additionally, the reachability of all potentially neighboring nodes can be checked at larger time intervals. This might be particularly advantageous because the neighbor relationship can change due to movements of the mobile participants or nodes, respectively. In such cases, a new sparse graph can be created and especially distributed over the network or provided for each of the nodes of the network, respectively.

The generation of the sparse graph 92b can be centralized, exemplarily with the aid of the central processing node 33 of Fig. 2, or decentralized, exemplarily with the aid of each node of the network such as node 30 of Fig. 1. In both cases, the full graph or a part thereof is determined and/or distributed in the network, especially along with the quality features of each edge in both directions. Therefore, each node especially has the corresponding required information and can create the sparse graph or a part thereof with the above-mentioned certain properties such as determined quality features and/or the respective position information.

A subsequent distribution in the network and/or the distribution of a checksum, exemplarily a hash value, for this graph can additionally ensure the consistency of the information in the network. The distribution of a checksum or a hash value, respectively, can be advantageous because only one value and not the entire information has to be distributed over the graph or the network, respectively.

Furthermore, especially in case of inconsistencies, voting can be used. For example, the node with the smallest internal network address then determines how the sparse graph looks.

Moreover, during the generation of the sparse graph, a coloring can also take place, i.e., a division of the nodes into categories. In the simplest case, this is done using an even/odd categorization, i.e., modulo 2: odd exemplarily comprises [1, 3, 5, 7, ...], and even exemplarily comprises [2, 4, 6, 8, ...]. In this context, each network node is especially assigned an internal address or corresponding network internal marker. An even node then has only odd neighbors in the sparse graph and vice versa.

If such an arrangement is not feasible, even this simple categorization can be extended to modulo n as well. For example, module 4 which leads to the following four categories: [1, 5, 9, ...], [2, 6, 10, ...], [3, 7, 11, ...], and [4, 8, 12, ...].

It is noted that such a categorization modulo 2, i.e., even/odd is exemplarily shown in Fig. 4 described above. In a slot, only the nodes of one category transmit and the others listen. This arrangement is particularly advantageous if a transmitter has several antennas radiating in different directions. Then, parallel transmitting and receiving via several antennas is possible. It is also possible that within an antenna array with electronically directed antennas, several lobes are used in parallel for transmitting and/or receiving.

Furthermore, it might be particularly advantageous if explicit nCTS packets are only sent to senders or transmitting nodes, respectively, of other RTS packets especially to prevent sending data there. Preferably, no nCTS is sent for the own RTS sender. Additionally, no receipt of CTS may be considered as implicit nCTS there.

It is noted that a further advantage can be that a reservation request for certain data slots can already be sent explicitly at RTS.

Finally, with general respect to a sparse graph in the sense of the invention, such as the sparse graph 90 according to Fig. 4 and the sparse graph 92b of Fig. 7, or a full graph, such as the full graph 92a according to Fig. 6, respectively, and especially the inventive network, the following should be noted:
Transmission capacity reservations are preferably performed only to the neighbors in the sparse graph. If necessary, reservations can also be made to other neighbors of the full graph.

The radio communication network can advantageously be configured to perform spatial re-use or parallel transmission, respectively, of the respective transmission capacity reservation sequences by multiple nodes in parallel, thus especially requiring fewer reservation slots than there are network nodes.

Furthermore, the radio communication network can advantageously enable parallel transmission or reception for nodes or antennas in reservation slots that are not involved in the current communication for the respective transmission capacity reservation.

Further advantageously, the radio communication network allows for performing transmission capacity reservations on edges (especially of the sparse graph) in advance without the need for data to be available for transmission. In the event that data is then available, it can be transmitted with low latency.

As a further advantage, the radio communication network can use interleaving of RTS and CTS slots with data slots, thereby especially preventing long dead times without data transmission.

Moreover, the radio communication network can use probing to detect possible interference in the sparse graph, thereby especially enabling spatial re-use.

Advantageously, the radio communication network can enable avoiding large latencies in the case of forwarding especially by selectively choosing a sparse graph with optional pre-reservation.

As a further advantage, the radio communication network can make it possible in the RTS packets to send a reservation request for specific data slots.

Accordingly, the communication unit of an inventive node may be configured to send a transmission capacity reservation request in the at least one RTS handshake packet for at least one specific data slot.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A node (0-19, 30, 40, 41, 50, 51, 60, 61, 70) for a radio communication network with dynamic reservation of transmission capacity, the node (0-19, 30, 40, 41, 50, 51, 60, 61, 70) comprising:
a communication unit (31) for communicating with at least one neighboring node, and
at least one antenna (32a, 32b, 32c) coupled to said communication unit (31),
wherein the communication unit (31) is configured to reserve transmission capacity on the basis of at least one RTS and/or CTS and/or nCTS handshake packet, and
wherein the communication unit (31) is further configured to set or limit transmission capacity reservation to a certain number of the at least one neighboring node on the basis of certain properties with respect to said certain number of the at least one neighboring node.

2. The node (0-19, 30, 40, 41, 50, 51, 60, 61, 70) according to claim 1, wherein the at least one antenna (32a, 32b, 32c) especially comprises between 3 and 6 antennas or more than 6 antennas,
wherein the certain number of the at least one neighboring node is limited to 1 neighboring node (40, 50, 60) per antenna (32a, 32b, 32c),
wherein each neighboring node is especially reached directly or via at least one hop.

3. The node (0-19, 30, 40, 41, 50, 51, 60, 61, 70) according to claim 1,
wherein the at least one antenna (32a, 32b, 32c) especially comprises 1 or 2 antennas,
wherein the certain number of the at least one neighboring node is limited to between 1 and 4 neighboring nodes per antenna,
wherein each neighboring node is especially reached directly or via at least one hop.

4. The node (0-19, 30, 40, 41, 50, 51, 60, 61, 70) according to any of the claims 1 to 3,
wherein at least one, preferably each, of the at least one antenna (32a, 32b, 32c) comprises or is an antenna with directivity or directional characteristics, and/orwherein at least a part, preferably the entirety, of the at least one antenna (32a, 32b, 32c) is configured to cover the corresponding communication needs especially in all spatial directions.

5. The node (0-19, 30, 40, 41, 50, 51, 60, 61, 70) according to any of the claims 1 to 4,
wherein the communication unit (31) is configured to transmit and/or receive at least one payload data packet.

6. The node (0-19, 30, 40, 41, 50, 51, 60, 61, 70) according to claim 5,
wherein the communication unit (31) is configured to interleave at least one RTS and/or CTS slot with at least one slot for the at least one payload data packet.

7. The node (0-19, 30, 40, 41, 50, 51, 60, 61, 70) according to any of the claims 1 to 6,
wherein the certain properties comprise at least one of position information, receive level, signal-to-noise ratio, data rate, especially achievable data rate, bit error rate, especially bit error rate without coding, or any combination thereof.

8. The node (0-19, 30, 40, 41, 50, 51, 60, 61, 70) according to any of the claims 1 to 7,
wherein the communication unit (31) is configured to transmit the at least one nCTS handshake packet only to the at least one neighboring node, especially the certain number of the at least one neighboring node, transmitting at least another RTS handshake packet, and/or
wherein the communication unit (31) is configured not to transit the at least one nCTS handshake packet in the context of transmitting the at least one RTS handshake packet, and/or
wherein the communication unit (31) is configured to evaluate no receipt of the at least one CTS handshake packet as at least one implicit nCTS handshake packet.

9. The node (0-19, 30, 40, 41, 50, 51, 60, 61, 70) according to any of the claims 1 to 8,
wherein the communication unit (31) is configured to use probing for detecting potential interference with respect to the at least one neighboring node, especially the certain number of the at least one neighboring node.

10. The node (0-19, 30, 40, 41, 50, 51, 60, 61, 70) according to any of the claims 1 to 9,
wherein the communication unit (31) is configured to create at least a part of a sparse communication table on the basis of the certain number of the at least one neighboring node or the certain number of the at least one neighboring node and corresponding links between said certain number of the at least one neighboring node.

11. The node (0-19, 30, 40, 41, 50, 51, 60, 61, 70) according to claim 10,
wherein the communication unit (31) is configured to determine a checksum with respect to at least the part of the sparse communication table, and/or
wherein the communication unit (31) is configured to transmit at least the part of the sparse communication table and/or the checksum to the certain number of the at least one neighboring node.

12. A radio communication network (80, 81) with dynamic reservation of transmission capacity, the radio communication network comprising at least two nodes (0-19, 30, 40, 41, 50, 51, 60, 61, 70) according to any of the claims 1 to 11.

13. The radio communication network (80, 81) according to claim 12,
wherein the radio communication network (80, 81) further comprises at least one central processing node (33),
wherein the at least one central processing node (33) is configured to create a full communication table on the basis of the at least two nodes (0-19, 30, 40, 41, 50, 51, 60, 61, 70) or the at least two nodes (0-19, 30, 40, 41, 50, 51, 60, 61, 70) and corresponding links between the at least two nodes (0-19, 30, 40, 41, 50, 51, 60, 61, 70), and/or
wherein the at least one central processing node (33) is configured to derive a sparse communication table especially from the full communication table preferably on the basis of certain properties with respect to the at least two nodes (0-19, 30, 40, 41, 50, 51, 60, 61, 70).

14. The radio communication network (80, 81) according to claim 13,
wherein the at least one central processing node (33) is configured to determine a checksum with respect to the sparse communication table, and/or
wherein the at least one central processing node (33) is configured to transmit the sparse communication table and/or the checksum to the at least two nodes (0-19, 30, 40, 41, 50, 51, 60, 61, 70).

15. A method for dynamic reservation of transmission capacity with respect to a radio communication network, the method comprising the steps of:
communicating (100) with at least one neighboring node of the radio communication network especially with the aid of a communication unit of a node of the radio communication network,
setting or limiting (101) transmission capacity reservation to a certain number of the at least one neighboring node on the basis of certain properties with respect to said certain number of the at least one neighboring node especially with the aid of the communication unit, and
reserving (102) transmission capacity on the basis of at least one RTS and/or CTS and/or nCTS handshake packet especially with the aid of the communication unit.
